# EUROPÄISCHE PATENTSCHRIFT

(11) **EP 0 948 982 B1**
(45) Veröffentlichungstag und Bekanntmachung des Hinweises auf die Patenterteilung: **14.01.2004**
(21) Anmeldenummer: 98810307.3
(22) Anmeldetag: 09.04.1998
(51) Int. Cl.: B01D 3/00

(54) **Flüssigkeitsverteiler für Trennkolonnen**
Liquid distributor for separation columns
Distributeur de liquide pour des colonnes de séparation

(43) Veröffentlichungstag der Anmeldung: 13.10.1999
(73) Patentinhaber: Sulzer Chemtech AG, 8404 Winterthur (CH)
(72) Erfinder: Knoche, Martin, 8404 Winterthur (CH)
(74) Vertreter: Sulzer Management AG

(56) Entgegenhaltungen:
- WO-A-90/14879
- DD-A- 248 419
- GB-A- 675 874
- SOVIET PATENTS ABSTRACTS Week 933122. September 1993 Derwent Publications Ltd., London, GB; AN 93248928 XP002078412 & SU 1 754 184 A (RUBEZAN SECT DNEPR CHEM TECHN INST ), 15. August 1992

## Beschreibung

Die Erfindung betrifft einen Flüssigkeitsverteiler für Trennkolonnen gemäss Oberbegriff von Anspruch 1 sowie eine Kolonne mit dem Verteiler.

Aus der GB-A- 675 874 ist ein Flüssigkeitsverteiler bekannt, in dem Ausflusselemente in Durchbrüchen von Trögen eingesetzt sind, wobei die Ausflusselemente rohrartig ausgebildet sind und aus Metall oder Kunststoff bestehen können.

Bei Stoffaustauschverfahren mit beispielsweise Schwefelsäure, Salpetersäure, Chloressigsäure oder Ameisensäure sind für Flüssigkeitsverteiler Materialien zu verwenden, die gegen die genannten hochkorrosiven Stoffe beständig sind. Es kommen Verteiler in Frage, die aus keramischem Material oder auch aus einem Gussmaterial wie beispielsweise Eisensiliziumkugelgraphit hergestellt sind. Bekannte Keramikverteiler oder Verteiler aus Gussmaterial ergeben allerdings eine schlechte Flüssigkeitsverteilung wegen ungünstiger und uneinheitlicher Geometrie der Ausflusslöcher: Die Löcher haben Durchmesser, die wesentlich kleiner als die Wandstärken der Verteiler sind, so dass Einlaufeffekte nur schlecht beherrschbar sind. Die Lochdurchmesser streuen um einen Mittelwert (um rund ± 3 % bei keramischem Material). Eine Nachbehandlung mittels Ausschleifens, um einheitliche Durchmesser zu erhalten, ist aufwendig und kann aus Kostengründen nicht vorgesehen werden.

Bei Kolonnen mit strukturierten (geordneten) Packungen aber auch mit Schüttfüllkörpern ist für deren optimale Funktion eine gleichmässige Flüssigkeitsverteilung wesentlich. Es ist daher Aufgabe der Erfindung, einen Verteiler insbesondere für hochkorrosive Flüssigkeiten zu schaffen, für dessen Ausflusslöcher eine einheitliche und strömungstechnisch günstige Geometrie vorgebbar ist. Diese Aufgabe wird durch den in Anspruch 1 definierten Flüssigkeitsverteiler gelöst.

Der Flüssigkeitsverteiler für Kolonnen umfasst mindestens einen wannenoder rohrförmigen Teil aus einem starren Material. Ausflusselemente aus nachgiebigem, insbesondere elastomerem Material sind in Durchbrüche des wannen- oder rohrförmigen Teils dicht eingesetzt. Eine zu verteilende Flüssigkeit kann durch jeweils mindestens eine Öffnung in dem Ausflusselement abfliessen. Diese Öffnung weist eine präzis vorgebbare Geometrie auf. Dank ihrer Nachgiebigkeit lassen sich die Ausflusselemente in die Durchbrüche trotz deren geometrischen Unregelmässigkeiten dicht einsetzen. Die Geometrie der Austrittsöffnungen bleibt dabei weitgehend unbeeinträchtigt.

Die abhängigen Ansprüche 2 bis 8 betreffen vorteilhafte Ausführungsformen des erfindungsgemässen Verteilers. Gegenstand des Anspruchs 9 ist ein Ausflusselement, Die Ansprüche 10 und 11 beziehen sich auf eine Kolonne mit erfindungsgemässen Verteilern.

Die erfindungsgemässe Lösung kann auch mit Vorteil bei Kolonnen angewendet werden, in denen üblicherweise metallische Flüssigkeitsverteiler eingesetzt sind.

Bei Laständerungen war es bisher notwendig, den gesamten Verteiler auszuwechseln. Bei dem erfindungsgemässen Verteiler sind die Ausflusselemente mittels Steckverbindungen in Durchbrüche von wannenoder rohrförmigen Teilen einbaubar. Die Steckverbindung erlaubt einen schnellen Austausch, so dass statt des gesamten Verteilers lediglich die Ausflusselemente ausgetauscht werden müssen.

Nachfolgend wird die Erfindung anhand der Zeichnungen erläutert. Es zeigen:
- Fig. 1: in schematischer Darstellung einen Ausschnitt aus einer Kolonne mit erfindungsgemässem Flüssigkeitsverteiler,
- Fig. 2: ein zweiteiliges Ausflusselement,
- Fig. 3: eine Prallplatte zu einem erfindungsgemässen Verteiler,
- Fig. 4: ein einteiliges Ausflusselement,
- Fig. 5: ein weiteres einteiliges Ausflusselement,
- Fig. 6: einen Querschnitt durch ein Verteilerrohr aus Metall und
- Fig. 7: einen Querschnitt durch ein weiteres Ausflusselement zu einem metallischen Verteiler.

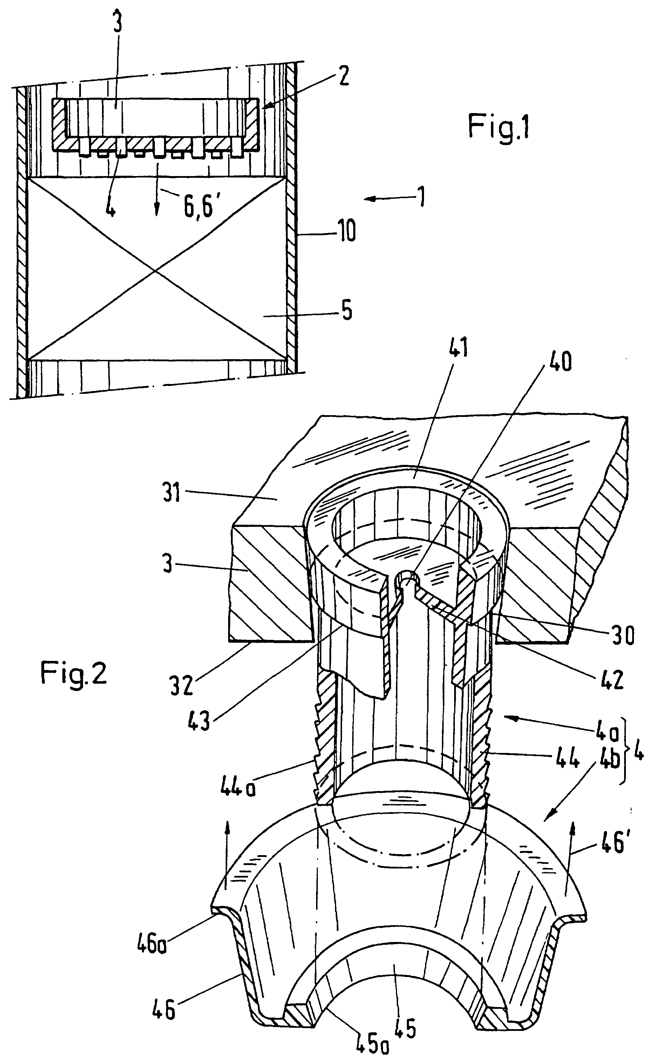

Die in Fig. 1 ausschnittsweise dargestellte Kolonne 1 umfasst innerhalb einer Kolonnenwand 10 einen Verteiler 2 mit einem wannenförmigen Teil 3 und Ausflusselementen 4, welcher über einem Packungsabschnitt 5 angeordnet ist. In der Kolonne 1 lässt sich ein Stoff- sowie Wärmeaustausch zwischen einer zu verteilenden Flüssigkeit 6 (Ausflussrichtung 6') und einem zweiten fluiden Medium, insbesondere einem Gas, durchführen. Es sind dabei die Austrittselemente 4 in einem regelmässigen, auf die Struktur der Packung 5 abgestimmten Muster angeordnet. Die Ausflusselemente 4 bilden in Fig. 1 Grundlöcher; sie können aber auch als seitlich im Verteiler 2 angeordnete Austrittslöcher vorgesehen sein.

Die Ausflusselemente 4 des erfindungsgemässen Verteilers 2 eignen sich für dickwandige Keramikwannen 3 besonders gut. Sie sind - siehe Fig.2 - in Durchbrüche 30 eingesetzt, deren Querschnitte sich in Ausflussrichtung 6' verjüngen oder auch konstant bleiben können. Im Fall der Verjüngung ergibt sich einfach eine Abdichtung an der Berührungsfläche zwischen Durchbruch und Ausflusselement 4. Es können aber auch Dichtungsringe als zusätzliche Komponenten der Ausflusselemente 4 vorgesehen sein.

Bei hohen Betriebstemperaturen wird in der Regel das Material der Ausflusselemente 4 sehr nachgiebig. Das starre Material des wannenförmigen Teils 3 gibt dann aber eine gute Stütze, dank der die geometrischen Eigenschaften und die Positionierung der Ausflusselemente 4 weitgehend erhalten bleiben.

Das Ausflusselement 4 der Fig.2 setzt.sich aus einem eintrittsseitigen Teil 4a und einem austrittsseitigen, als Fixierungsteil ausgebildeten Teil 4b , zusammen. Von der oberen Seite 31 der Wanne 3 her, der Seite des Flüssigkeitseintritts, ist der Teil 4a in den Durchbruch 30 eingesetzt. Der Teil 4a ist eintrittsseitig mit einer topfförmigen Vertiefung 41 ausgebildet, in deren Boden 42 eine Ausflussöffnung 40 angeordnet ist. Dieser Teil 4a wird mit Vorteil aus einem elastomeren Kunststoff - beispielsweise PFA (Perfluoralkylvinylethercopolymerisat) für Betriebstemperaturen bis rund 250°C oder ein anderes Fluorpolymer - und mittels eines Spritzgussverfahrens hergestellt. Die Ausflussöffnung 40 weist so eine präzis vorgegebbar Geometrie auf. Wählt man für den Durchmesser der Ausflussöffnung 40 einen Wert, der grösser als die Dicke des Bodens 42 ist, so sind die Ausflussbedingungen gut reproduzierbar; ausserdem ist die durchströmende Flüssigkeitsmenge genau berechenbar.

Der obere Bereich 41 des eintrittsseitigen Teils 4a, der sich bis zu einer unteren Kante 43 erstreckt, hat eine dem Durchbruch 30 entsprechende Form, derart, dass längs einer Berührungsfläche zwischen dem Bereich 41 und der Oberfläche des Durchbruchs 30 praktisch keine Flüssigkeit abfliessen kann. Der untere Bereich 44 des eintrittsseitigen Teils 4a ist als zylindrisches Rohr ausgebildet, das keinen Kontakt mit der Oberfläche des Druchbruchs 30 hat.

Das Fixierungsteil 4b, das ebenfalls mit Vorteil aus einem Elastomer hergestellt ist, lässt sich über das Rohr 44 des eintrittsseitigen Teils 4a schieben (Pfeile 46'), wobei ein elastisch dehnbarer Sprengring 45 das Rohr 44 umspannt. Feine Rippen 44a am Rohr 44 ergeben im Zusammenwirken mit einer unteren Kante 45a des Sprengrings 45 eine Fixierung. Das Fixierungsteil 4b, das eine topfförmige Schale 46 aufweist, wird so weit über das Rohr 44 geschoben, dass die Schale 46 unter einer Druckspannung mit ihrem oberen Rand 46a an der Aussenseite 32 der Wanne 3 anliegt.

Zwischen dem Rand 46a und der Aussenseite 32 der Wanne 3 können plattenförmige Elemente eingeklemmt werden. Ein solches, nicht dargestelltes Element kann Teil einer Hilfseinrichtung sein, beispielweise eine Prallplatte, die vor der Öffnung des Rohrs 44 angebracht sein kann.

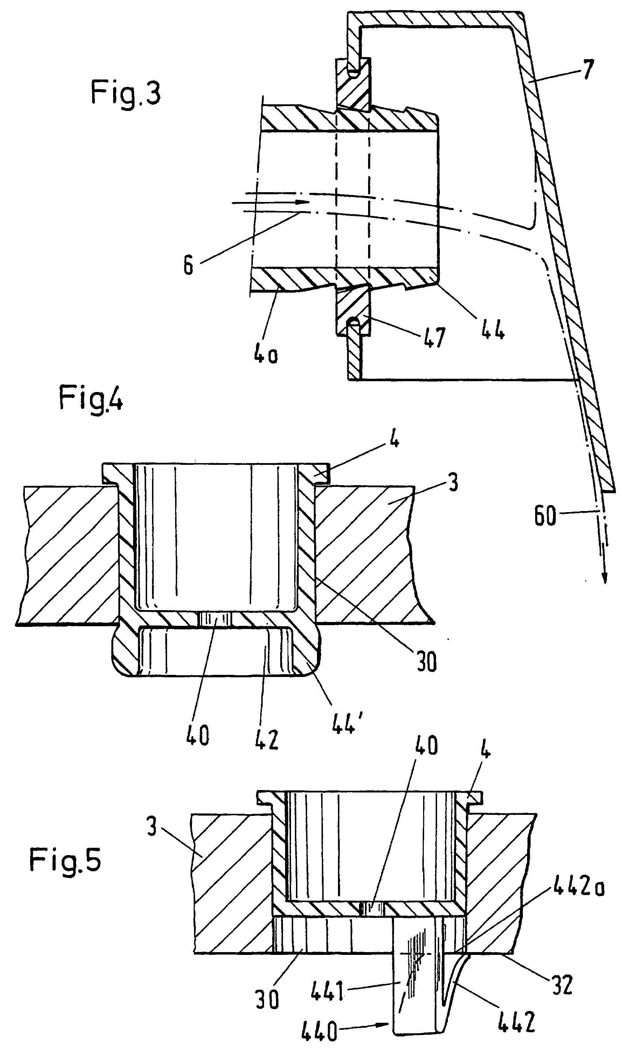

Fig.3 zeigt eine andere Prallplatte 7 zu einem Ausflusselement 4b mit einem austrittsseitigen Rohr 44. Ein strichpunktiert angedeuteter Flüssigkeitsstrahl 6, der horizontal aus einer Austrittsöffnung (40, vgl. Fig.2) ausströmt, trifft auf der Prallplatte 7 auf und fliesst dort als Film 60 nach unten ab. Hier ist die Prallplatte 7 gleich wie das Fixierungsteil 4b in Fig.2 mit einem Sprengring 47 befestigt. Dieser Sprengring 47 kann Teil einer Fixierung des Ausflusselements sein, oder er kann auch als zusätzliches Teil neben einem Fixierungsteil 4b vorgesehen sein. Die Prallplatte 7 kann auch in umgekehrter Richtung gegenüber der Vertikalen geneigt sein, so dass ein nach oben strömendes Gas weniger behindert wird.

In Fig.4 ist ein einteiliges Ausflusselement 4 aus einem elastischen Material dargestellt, das Fixierungsteile 44' umfasst, mit denen das Ausflusselement 4 rutschfest im Durchbruch 30 gehalten wird. Ein derartiges Ausflusselement 4 kann nur verwendet werden, wenn die Geometrie des Durchbruchs mit einem kostengünstigen Verfahren präzis vorgebbar ist.

Fig.5 zeigt eine Variante, bei der Fixierungsteile 440 als elastischer "Widerhaken" ausgebildet sind. Der dargestellte Widerhaken umfasst eine Flanke 441 mit einem flexiblen Stück 442, das beim Einschieben an der Oberfläche des Durchbruchs 30 entlanggleitet und anschliessend ausklappt. Die obere Kante 442a hakt dabei an der äusseren Oberfläche 32 der Wanne 3 ein.

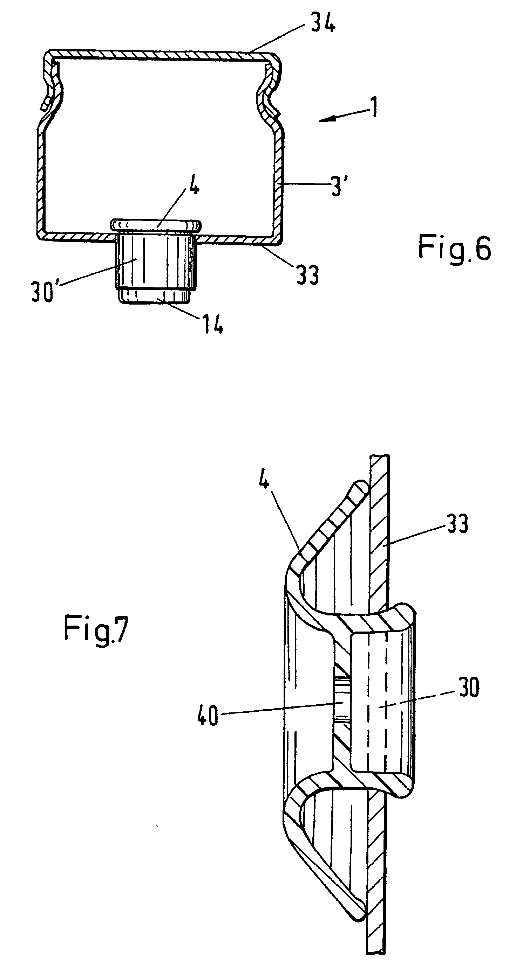

Der erfindungsgemässe Flüssigkeitsverteiler 1 - siehe Fig. 6 - kann auch in metallischen Verteilkanälen 3' installiert werden, die beispielsweise rohrförmig ausgebildet sind und die ein wannenförmiges Unterteil 33 sowie ein entfernbares Deckteil 34 umfassen. Ein Ausflusselement 4, beispielsweise eines gemäss Fig.4, ist in ein zylindrisches Rohrstück 30' des Unterteils 33 eingesetzt.

Fig. 7 zeigt ein weiteres Ausführungsbeispiel für ein Ausflusselement 4, das in einer kreisförmigen Öffnung in einer metallischen Verteilerwand 33 einsetzbar ist. Ein solches Ausflusselement 4 ist sehr einfach und schnell austauschbar. Wie bereits oben erwähnt, ist dies bei Laständerungen der Kolonne von Vorteil, da nicht mehr ein Wechsel des ganzen Verteilers notwendig ist.

## Patentansprüche

1. Flüssigkeitsverteiler (2) für Trennkolonnen (1), mit mindestens einem wannen- oder rohrförmigen Teil (3) aus einem starren Material, wobei Ausflusselemente (4) aus elastomerem Material, die in Durchbrüche (30) des wannen- oder rohrförmigen Teils dicht eingesetzt sind, so dass eine zu verteilende Flüssigkeit (6) nur durch jeweils mindestens eine Öffnung (40) in dem Ausflusselement abfliessen kann, wobei die Öffnung eine präzis vorgebbare Geometrie aufweist.

2. Flüssigkeitsverteiler nach Anspruch 1, **dadurch gekennzeichnet, dass** die Durchbrüche (30) des wannen- oder rohrförmigen Teils (3) Querschnitte haben, die sich in Ausflussrichtung (6') verjüngen oder konstant bleiben.

3. Flüssigkeitsverteiler nach Anspruch 1 oder 2, **dadurch gekennzeichnet, dass** die Ausflusselemente (4) jeweils als ganzes Element oder mit einem Teil auf der Seite (31) des Flüssigkeitseintritts in die Durchbrüche (30) einsetzbar sind, dass sie eintrittsseitig mit einer topfförmigen Vertiefung (41) ausgebildet sind und dass in einem Boden (42) dieser Vertiefung die Ausflussöffnung (40) angeordnet ist, die insbesondere einen Durchmesser aufweist, der grösser als die Dicke des Bodens (42) ist.

4. Flüssigkeitsverteiler nach einem der Ansprüche 1 bis 3, **dadurch gekennzeichnet, dass** die Ausflusselemente (4) Fixierungsteile (4b, 44', 440) umfassen, mittels derer sich jeweils ein rutschfester Sitz des Ausflusselements im Durchbruch (30) ergibt.

5. Flüssigkeitsverteiler nach Anspruch 4, **dadurch gekennzeichnet, dass** die Ausflusselemente (4) jeweils aus einem Stück sind und die Fixierungsteile (44') austrittsseitig integriert sind.

6. Flüssigkeitsverteiler nach Anspruch 4, **dadurch gekennzeichnet, dass** die Ausflusselemente jeweils aus einem eintrittsseitigen Teil (4a) und einem austrittsseitigen, als Fixierungsteil ausgebildeten Teil (4b) zusammengesetzt sind, wobei insbesondere das Fixierungsteil auf das eintrittsseitige Teil aufsteckbar ist.

7. Flüssigkeitsverteiler nach Anspruch 6, **dadurch gekennzeichnet, dass** bei den Ausflusselementen (4) austrittsseitig in einem Abstand Prallplatten (7) angeordnet sind, wobei diese Prallplatten mittels der austrittsseitigen Teile (4b) befestigbar sind, mit diesen Teilen jeweils ein zusammenhängendes Stück bilden oder als drittes Teil am eintrittsseitigen Teil (4a) befestigbar sind.

8. Flüssigkeitsverteiler nach einem der Ansprüche 1 bis 3, **dadurch gekennzeichnet, dass** die Wanne (3) aus keramischem Material oder einem Gussmaterial besteht und die Ausflusselemente (4) spritzgegossen sind.

9. Kolonne (1) mit Flüssigkeitsverteiler (2) gemäss einem der Ansprüche 1 bis 8 zur Durchführung von Stoff- sowie Wärmeaustausch zwischen einer zu verteilenden Flüssigkeit (6) und einem zweiten fluiden Medium, insbesondere einem Gas.

10. Kolonne nach Anspruch 9, **dadurch gekennzeichnet, dass** die Flüssigkeitsverteiler (2) über strukturierten Packungen (5) oder Schüttfüllkörpern angeordnet sind und dass die Austrittselemente (4) in einem regelmässigen, auf die Packung abgestimmten Muster angeordnet sind.

## Claims

1. Liquid distributor (2) for separation columns (1) comprising at least one tub shaped or tubular part (3) of a rigid material with outflow elements (4) of elastomeric material which are sealingly inserted into apertures (30) of the tub shaped or tubular part so that a liquid (6) to be distributed can in each case only flow away through at least one opening (40) in the outflow element, with the opening having a precisely predeterminable geometry.

2. Liquid distributor in accordance with claim 1 **characterised in that** the apertures (30) of the tub shaped or tubular part (3) have cross-sections which contract or remain constant in the outflow direction (6').

3. Liquid distributor in accordance with claim 1 or claim 2 **characterised in that** the outflow elements (4) are in each case insertable as a complete element or with one part on the side (31) of the liquid entry into the apertures (30); **in that** they are formed at the entry side with a pot shaped depression (41); and **in that** the outflow opening (40) is arranged in a base (42) of this depression which in particular has a diameter which is greater than the thickness of the base (42).

4. Liquid distributor in accordance with one of the claims 1 to 3 **characterised in that** the outflow elements (4) comprise fixing parts (4b, 44', 440) by means of which in each case a non-slipping seat of the outflow element in the aperture (30) results.

5. Liquid distributor in accordance with claim 4 **characterised in that** the outflow elements (4) are in each case of a single piece and the fixing parts (44') are integrated at the outflow side.

6. Liquid distributor in accordance with claim 4 **characterised in that** the outflow elements are in each case assembled from an entry-side part (4a) and an outflow-side part (4b) which is formed as a fixing part, with it being possible in particular to push the fixing part onto the entry-side part.

7. Liquid distributor in accordance with claim 6 **characterised in that** baffle plates (7) are arranged at a distance in the outflow elements (4) at the outlet side, with these baffle plates being fastenable by means of the outflow-side parts (4b), in each case forming a connected piece together with these parts, or being fastenable as a third part to the entry-side part (4a).

8. Liquid distributor in accordance with one of preceding claims 1 to 3 **characterised in that** the tub (3) consists of a ceramic material or of a cast material and the outflow elements (4) are injection moulded.

9. Column (1) with a liquid distributor (2) in accordance with one of the claims 1 to 8 for carrying out a material exchange and heat exchange between a liquid (6) to be distributed and a second fluid medium, in particular a gas.

10. Column in accordance with claim 9 **characterised in that** the liquid distributors (2) are arranged above structured packings (5) or bulk filled bodies; and **in that** the outflow elements (4) are arranged in a regular pattern which is matched to the packing.

## Revendications

1. Distributeur de liquide (2) pour des colonnes de séparation (1), avec au moins une partie en forme de cuvette ou de tube (3) en un matériau rigide, où des éléments d'écoulement (4) en matériau élastomère sont insérés d'une manière étanche dans des perçages (30) de la partie en forme de cuvette ou de tube, de telle sorte qu'un liquide à distribuer (6) peut s'écouler seulement à travers respectivement au moins une ouverture (40) dans l'élément d'écoulement, où l'ouverture présente une géométrie pouvant être prédéfinie d'une manière précise.

2. Distributeur de liquide selon la revendication 1, **caractérisé en ce que** les perçages (30) de la partie en forme de cuvette ou de tube (3) ont des sections transversales qui diminuent dans la direction d'écoulement (6') ou qui restent constantes.

3. Distributeur de liquide selon la revendication 1 ou 2, **caractérisé en ce que** les éléments d'écoulement (4) peuvent être placés respectivement comme éléments entiers ou avec une partie sur le côté (31) de l'entrée de liquide dans les perçages (30), qu'ils sont réalisés, côté entrée, avec un creux en forme de pot (41) et **en ce qu'**il est disposé dans un fond (42) de ce creux l'ouverture d'écoulement (40), qui a notamment un diamètre qui est plus grand que l'épaisseur du fond (42).

4. Distributeur de liquide selon l'une des revendications 1 à 3, **caractérisé en ce que** les éléments d'écoulement (4) comprennent des parties de fixation (4b, 44', 440) aux moyens desquelles est obtenu respectivement un ajustement résistant à un glissement de l'élément d'écoulement dans le perçage (30) .

5. Distributeur de liquide selon la revendication 4, **caractérisé en ce que** les éléments d'écoulement (4) sont respectivement en une pièce, et que les parties de fixation (44') sont intégrées côté sortie.

6. Distributeur de liquide selon la revendication 4, **caractérisé en ce que** les éléments d'écoulement sont constitués chacun d'une partie côté entrée (4a) et d'une partie côté sortie (4b), réalisée comme partie de fixation, où notamment la partie de fixation peut être poussée sur la partie côté entrée.

7. Distributeur de liquide selon la revendication 6, **caractérisé en ce qu'**aux éléments d'écoulement (4), côté sortie, des plaques de rebondissement (7) sont disposées à un écart, où ces plaques de rebondissement peuvent être fixées au moyen des parties côté sortie (4b), forment avec ces parties respectivement une pièce continue ou peuvent être fixées, comme troisième partie, à la partie côté entrée (4a).

8. Distributeur de liquide selon l'une des revendications 1 à 3, **caractérisé en ce que** la cuvette (3) est réalisée en matériau céramique ou en un matériau de fonte, et que les éléments d'écoulement (4) sont moulés par injection.

9. Colonne (1) avec un distributeur de liquide (2) selon l'une des revendications 1 à 8 pour effectuer un échange de matière et de chaleur entre un liquide à distribuer (6) et un deuxième milieu fluide, notamment un gaz.

10. Colonne selon la revendication 9, **caractérisé en ce que** les distributeurs de liquide (2) sont disposés sur des garnissages structurés (5) ou des corps de remplissage en vrac, et **en ce que** les éléments de sortie (4) sont disposés selon un dessin régulier, adapté au garnissage.
